# EUROPÄISCHE PATENTANMELDUNG

(11) **EP 1 946 687 A2**
(43) Veröffentlichungstag der Anmeldung: **23.07.2008**
(21) Anmeldenummer: 08000472.4
(22) Anmeldetag: 11.01.2008
(51) Int. Cl.: A47K 3/40

(54) **Vorrichtung und Verfahren zur Herstellung eines schalenförmigen Elements**

(30) Priorität: 17.01.2007 DE 202007001007 U
(71) Anmelder: ALTURA LEIDEN HOLDING B.V., 4131 LX Vianen ZH (NL)
(72) Erfinder:
(74) Vertreter: Schmitt, Meinrad

(57) **Zusammenfassung**

Die Erfindung bezieht sich auf eine Vorrichtung sowie ein Verfahren zur Herstellung eines schalenförmigen Elements, insbesondere Duschwanne oder Duschboden, aus einer Kunststoffplatte, welche bevorzugt aus Sanitäracryl besteht. Die Vorrichtung soll dahingehend ausgebildet werden und ferner soll ein Verfahren derart vorgeschlagen werden, dass unterschiedlich ausgebildete schalenförmige Elemente mit einem geringen konstruktiven Aufwand und/oder in einfacher Weise herstellbar sind. Hierzu wird vorgeschlagen, dass die Vorrichtung einen variabel vormontierbaren Formrahmen aufweist, welcher aus verschiedenen und/oder aufeinander abgestimmten Rahmenteile (1-4, 6-9) aufgebaut ist. Das Verfahren wird unter Verwendung eines derart variabel montierbaren Formrahmens durchgeführt, welcher aus verschiedenen und/oder aufeinander abgestimmten Rahmenteilen (1-4, 6-9) aufgebaut ist.

## Beschreibung

Die Erfindung bezieht sich auf eine Vorrichtung zur Herstellung eines schalenförmigen Elements, insbesondere Duschwanne oder Duschboden, gemäß den im Oberbegriff des Patentanspruchs 1 angegebenen Merkmalen. Ferner bezieht sich die Erfindung auf ein Verfahren zur Herstellung eines schalenförmigen Elements.

Aus der DE 198 50 042 A1 ist eine derartige Vorrichtung zum Formen eines schalenförmigen Elements bzw. Kunststoffteils aus einer Kunststoffplatte durch Tiefziehen bekannt. Die Kunststoffplatte besteht insbesondere aus thermoplastisch verformbarem Sanitäracryl und wird mittels einer schalenförmigen Tiefeziehform durch ein Tiefziehverfahren beispielsweise zu einer Duschwanne oder Badewanne oder eines Whirlpools verformt. Die Vorrichtung enthält einen Hubtisch, auf welchem die Tiefziehform befestigt ist, wobei der Hubtisch in einem nach oben offenen Saugkasten angeordnet ist. Oberhalb des Saugkastens ist ein absenkbarer Spannrahmen vorgesehen zum Klemmen der Kunststoffplatte gegen einen der Öffnung des Saugrahmens zugeordneten Fensterrrahmen. Dieser weist eine Fensteröffnung auf, mittels welcher die Tiefziehform in angehobener Position umgriffen wird. Ferner sind kulissenartig verschiebbare und die Öffnung des Saugkastens abdeckende Klemmelemente vorgesehen, welche zur Fixierung am genannten Fensterrahmen anliegen.

Ferner ist aus der DE 12 30 549 eine Vorrichtung zum Herstellen von Lichtkuppeln verschiedener Größe aus Kunststoff bekannt, wobei ein Fußrahmen auf einem Arbeitstisch auswechselbar angeordnet ist. Ober dem Arbeitstisch ist eine Oberplatte mit angreifbaren Schraubenspindeln angeordnet, um mittels eines Spannrahmens eine erhitzbare Acrylplatte auf dem Fußrahmen festzuspannen, wobei nachfolgend Pressluft von unten eingeblasen wird, um aus der Acrylglasplatte die Lichtkuppel zu formen.

Weiterhin ist aus der AT 223 371 B ein Spannrahmen für Folien oder Platten, insbesondere aus Kunststoff bekannt, wobei der Spannrahmen aus gegeneinander verstellbaren Rahmenteilen besteht. An den Innenseiten der Rahmenteile sind in deren Längsrichtung verlaufende hinterschnittene Nuten vorgesehen, in welche Vorsprünge der Stirnseiten der jeweils anderen Rahmenteile eingreifen. Hierdurch ist eine stufenlose Änderung der Rahmengröße des Spannrahmens möglich, doch kann dieser aufgrund der über die Außenmaße vorstehende Rahmenteile nicht als Formrahmen zum Einsatz gelangen zur Herstellung eines schalenförmigen Elements.

Des Weiteren ist aus der US 4 750 967 eine Vorrichtung zur Herstellung einer Badewanne bekannt, enthaltend zum einen eine einteilige Tiefziehform und zum anderen einen verstellbaren Spannrahmen, mittels welchen die zu verformende Kunststoffplatte auf der einteilig ausgebildeten Form festgespannt wird. Für unterschiedlich ausgebildete Wannen ist jeweils eine entsprechend ausgebildete schalenförmige Tiefziehform erforderlich.

Bekanntlich werden schalenförmige Elemente, insbesondere Sanitärelemente, wie z. B. Duschwannen, Duschböden, Waschtische oder dergleichen, in unterschiedlichen Formen und/oder Größen hergestellt, wofür jeweils entsprechend ausgebildete schalenförmige Tiefziehformen benötigt werden. Die Herstellung und Bereitstellung solcher Tiefziehformen erfordert einen erheblichen Aufwand, wobei Änderungen nicht ohne Weiteres möglich sind und für unterschiedliche Formen und/oder Abmessungen eine Vielzahl von entsprechend ausgebildeten Tiefziehformen erforderlich ist. Auch ist die Anpassung an unterschiedliche Einbausituationen oder gar an besondere Kundenwünsche nicht ohne Weiteres möglich, so dass die schalenförmigen Elemente in der Praxis nur in wenigen Variationen und/oder mit vorgegebenen Standardabmessungen wirtschaftlich herstellbar sind.

Hiervon ausgehend liegt der Erfindung die Aufgabe zugrunde, die Vorrichtung dahingehend auszubilden und ein Verfahren vorzuschlagen, dass unterschiedlich ausgebildete schalenförmige Elemente mit einem geringen konstruktiven Aufwand und/oder in einfacher Weise hergestellt werden können. Die Vorrichtung und das Verfahren sollen die Fertigung von schalenförmigen Elementen, wie insbesondere Duschwannen oder Duschböden in einfacher Weise nach individuellem Aufmaß ermöglichen, wobei eine konsequente Durchsetzung des Aufmaß-Gedankens, insbesondere für individuell gestaltete Duschbereiche erreicht werden soll. Des Weiteren soll die Ausbildung und/oder Positionierung eines Ablaufs für Wasser aus dem schalenförmigen Element problemlos nach den jeweiligen Anforderungen vorgenommen werden können. Ferner sollen das oder die mit der Vorrichtung erfindungsgemäß hergestellten Elemente die vorstehend aufgeführten Bedingungen erfüllen und insgesamt soll ein System aus schalenförmigen Elementen geschaffen werden, weiches eine konsequente Durchsetzung des Aufmaß-Gedankens und/oder die Fertigung nach individuellem Aufmaß unter Einsatz einer funktionsgerechten und den jeweiligen Anforderungen entsprechenden Vorrichtung verwirklicht.

Die Lösung dieser Aufgabe erfolgt gemäß den im Patentanspruch 1 angegebenen Merkmalen sowie gemäß dem auf das Verfahren gerichteten selbständigen Patentanspruch.

Die vorgeschlagene Vorrichtung zeichnet sich durch einen einfachen und gleichwohl funktionsgerechten Aufbau aus und enthält anstelle einer bekannten schalenförmigen Tiefziehform einen variabel vormontierbaren Formrahmen, welcher aus verschiedenen und aufeinander abgestimmten Rahmenteilen aufgebaut ist. Der Formrahmen ist auf einer Ziehplatte positioniert und ist mit dieser in vorteilhafter Weise insbesondere in einem Saugkasten der eingangs beschriebenen Art angeordnet, wobei ansonsten in bekannter Weise das Tiefziehverfahren durchgeführt wird. Für den Aufbau des Formrahmens sind Rahmenteile unterschiedlicher Größe und/oder Formgebung vorgesehen, welche insbesondere durch Segmentbauweise oder Teleskop-Profile und zweckmäßig mittels aufeinander abgestimmte Verbindungselemente zu dem Formrahmen vormontiert und/oder zusammengesetzt werden zur Vorgabe der jeweils gewünschten Größe und/oder Form des schalenförmigen Elements, insbesondere aus Sanitäracryl. So kann bespielsweise für eine rechteckförmige Wanne der Formrahmen aus vier geraden und jeweils rechtwinklig zueinander angeordneten Rahmenteilen aufgebaut sein, welche in den vier Ecken mittels Eckverbindern miteinander verbunden sind, wobei die Längen der jeweils parallel liegenden Rahmenteile auf die gewünschte bzw. erforderliche Länge bzw. Breite des schalenförmigen Elements abgestimmt sind. Auch die Eckverbinder sind als Rahmenteile ausgebildet und besitzen beispielsweise Zapfen, welche in die inneren Hohlkammern der genannten geraden Rahmenteile eingreifen und auf die Innenabmessungen der als Hohlprofle ausgebildeten geraden Rahmenteile abgestimmt sind. Ein Tiefziehwerkzeug bzw. eine Tiefziehform bekannter Bauform wird erfindungsgemäß ersetzt durch einen Formrahmen mit variablen Maßen und/oder variabler Kontur.

Anstelle der rechtwinkligen Anordnung der geraden Rahmenteile und somit der rechteckförmigen Ausbildung des schalenförmigen Elements, können die Eckverbinder auch für eine von einem rechten Winkel abweichende Verbindung der benachbart angeordneten anderen Rahmenteile ausgebildet sein. Somit können schalenförmige Elemente mit von der einen Rechteckform abweichenden unterschiedlichen Außenkonturen problemlos gefertigt werden, um beispielsweise für den Eck- oder Nischeneinbau des schalenförmigen Elements, insbesondere eines Duschbodens, im Falle von nicht rechtwinklig zueinander angeordneten Raumwänden gleichwohl eine optimale Integration des auf die besonderen bauseits vorgegebenen Bedingungen abgestimmten und/oder kundenspezifisch ausgebildeten Duschbodens zu ermöglichen. Des Weiteren können Rahmenteile in gebogener Form vorgesehen sein, wobei die Krümmungsform und/oder Krümmungsradien derselben unterschiedlich vorgegeben sein können. Ferner kann die Vorrichtung auch besondere Formstücke umfassen, um beispielsweise bei Ausbildung des schalenförmigen Elements als Duschboden ein Montageplateau für Duschsäulen oder dergleichen vorzugeben. Die Rahmenteile, Eckverbinder, sonstige Verbindungselemente oder Formstücke sind bevorzugt derart ausgebildet, dass der vormontierte Formrahmen eine vorgegebene, zweckmäßig gleiche Höhe aufweist, mit welcher der Formrahmen nach der Positionierung und Fixierung auf der Ziehplatte über diese vorsteht.

Zur Durchführung des erfindungsgemäßen Verfahrens wird der Formrahmen zunächst in der vorstehend erläuterten Weise aufgebaut und auf einer Ziehplatte angeordnet und befestigt. Nachfolgend wird das Ziehverfahren durchgeführt, wobei zunächst die Kunststoffplatte über den Formrahmen gelegt und insbesondere mittels eines Fensterrahmens auf der Ziehplatte fixiert wird. Daraufhin wird die Kunststoffplatte erwärmt und das eigentliche Tiefziehverfahren durchgeführt.

Weitere Vorteile und besondere Ausgestaltung der Erfindung sind in den Unteransprüchen sowie der nachfolgenden Beschreibung besonderer Ausführungsbeispiele angegeben.

Die Erfindung wird nachfolgend anhand der in der Zeichnung dargestellten Ausführungsbeispiele näher erläutert, ohne dass insoweit eine Beschränkung erfolgt. Es zeigen jeweils schematisch:
- Figur 1, 2: in Aufsichten einen rechteckförmigen Formrahmen vor bzw. nach der Montage,
- Figur 3: einen Formrahmen explosionsartig bzw. vor der Montage mit einem zusätzlichen Formstück,
- Figur 4: explosionsartig einen Formrahmen mit einer von der Rechteckform abweichenden Form bzw. Außenkontur,
- Figur 5: explosionsartig einen Formrahmen mit einem gebogenen bzw. viertelkreisförmigen Rahmenteil,
- Figur 6: eine seitliche Ansicht des auf einer Ziehplatte positionierten und fixierten Formrahmens einschließlich Kunststoffplatte, Fensterrahmen und Oberstempel,
- Figur 7 - 11: die weiteren Verfahrensschritte unter Verwendung der Vorrichtung gemäß Figur 6 zur Herstellung des schalenförmigen Elements bei Ausbildung als insbesondere bodenbündige Duschwanne oder Duschboden.

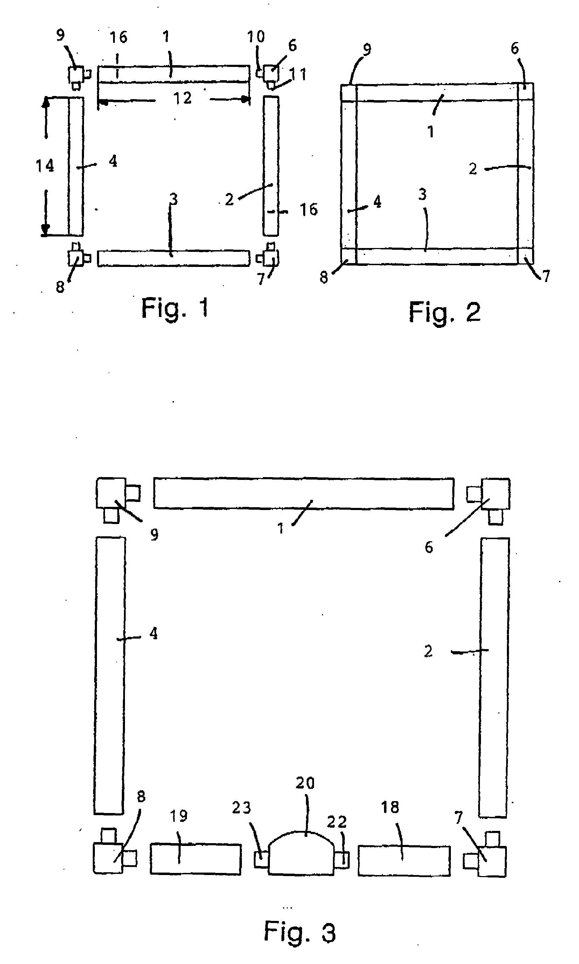

Der in Figur 1 und 2 dargestellte rechteckige Formrahmen enthält vier gerade Rahmenteile 1-4, welche als Hohlprofile ausgebildet sind. In den Eckbereichen sind die Rahmenteile 1 - 4 mit weiteren Rahmenteilen 6-9 miteinander verbunden, welche als Eckverbinder ausgebildet sind und in die Hohlkammern der zugeordneten Rahmenteile 1 - 4 mittels Verbindungselementen und/oder Verbindungszapfen 10, 11 eingreifen. Die parallel zueinander angeordneten Rahmenteile 1, 3 besitzen jeweils die Länge 12, während die beiden anderen Rahmenteile 2, 4 die Länge 14 aufweisen. Die Längen 12 und 14 sind den Anforderungen entsprechend und/oder kundenspezifisch vorgegeben. Erfindungsgemäß ist der Formrahmen als ein Bausatz aus unterschiedlich ausgebildeten und/oder unterschiedliche Längen 12, 14 aufweisenden Rahmenteilen ausgebildet und/oder aufgebaut. Der Formrahmen ist insbesondere durch Segmentbauweise aus einer vorgegebenen Anzahl von in geeigneter Weise ausgebildeten Rahmenteilen aufgebaut. Auch können erfindungsgemäß die Rahmenteile als Teleskop-Profile mit vorgebbaren Längen ausgebildet sein. Darüber hinaus erfolgt die Umsetzung und/oder der Zusammenbau des Formrahmens aus dem Rahmenteil-Bausatz automatisiert entsprechend den jeweiligen Vorgaben und/oder kundenspezifischen Wünschen.

In vorteilhafter Weise bestehen zwischen den jeweiligen Profilteilen 1 - 4 und den zugeordneten Eckverbindern 6 - 9 feste Verbindungen, welche gemäß den genannten Verbindungszapfen 10,11 als Steckverbindungen ausgebildet sind und in bevorzugter Weise, insbesondere durch zusätzliche Verschraubungen, eine feste Verbindung sicher stellen. Die Profilteile sind nach Aufmaß auf die gewünschten Längen 12, 14 geschnitten, wobei problemlos auch Profilteile aus vorangegangenen Aufträgen mit anderen Längen den Anforderungen entsprechend verwendet werden können. Des Weiteren enthalten in zweckmäßiger Weise die Rahmenteile 1 - 4 und/oder die Rahmenteile 6 - 9 bevorzugt nach außen gerichtete Entlüftungslöcher 16, welche hier durch gestrichelte Linien angedeutet sind, damit bei der Herstellung des schalenförmigen Elements und insbesondere dessen Randes eine Entlüftung erfolgen kann.

Figur 3 zeigt eine explosionsartige Darstellung des Formrahmens ähnlich Figur 1, wobei der Formrahmen wiederum die Rahmenteile 1, 2 und 4 aufweist, während das gemäß Zeichnung unten dargestellte Rahmenteil unterteilt ist in zwei kurze Rahmenteile 18, 19 und ein weiteres zwischen diesen angeordnetes Rahmenteil 20, welches als zusätzliches Formstück ausgebildet ist und wie die Eckverbinder Verbindungselemente und/oder Verbindungszapfen 22, 23 zur Verbindung mit den Rahmenteilen 18, 19 aufweist. Selbstverständlich können auch die anderen Rahmenteile zusätzlich oder alternativ korrespondierende Verbindungselemente aufweisen. Das in den Formrahmen integrierte Formstück 20 ist beispielsweise zur Ausbildung eines Montageplateaus einer Duschsäule eines mit einem solchen Formrahmen hergestellten Duschbodens vorgesehen. Es versteht sich, dass die Positionierung des Formstücks 20 nicht nur, wie dargestellt, in der Mitte der einen Längserstreckung des Formrahmens erfolgen kann, sondern auch asymmetrisch, wobei die kurzen Rahmenteile 18, 19 unterschiedliche Längen besitzen. Des Weiteren kann in einem Eckbereich des Formrahmens anstelle des Eckverbinders oder als ein solcher ausgebildetes Formstück mit der gewünschten Außenkontur angeordnet sein.

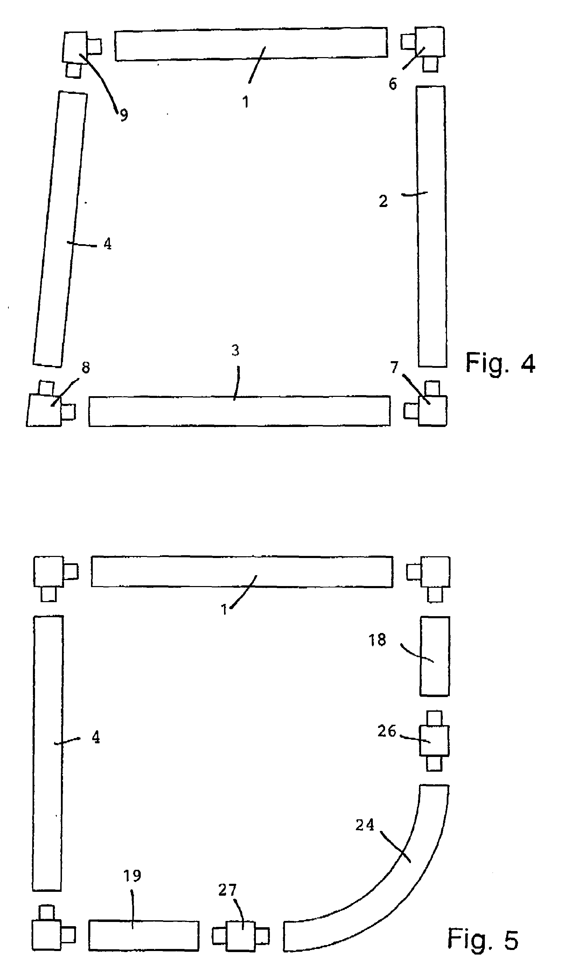

Figur 4 zeigt ein weiteres Ausführungsbeispiel des Formrahmens mit einer trapezartigen Außenkontur. Hierbei weisen die vier Rahmenteile 1 - 4 unterschiedliche Längen auf und die Eckverbinder 8, 9 sind derart ausgebildet, dass die Profilteile 4, 5 einen Winkel > 90° bilden, während die Profilteile 5, 1 einen Winkel < 90° bilden. Auch die beiden anderen Eckverbinder 6, 7 können abweichend von der dargestellten Ausbildung zur rechtwinkligen Verbindung der zugeordneten Profilteile auch für andere Winkel ausgebildet sein.

Figur 5 zeigt eine weitere Ausbildung des Formrahmens mit einem gebogenen Rahmenteil 24, welches gleichfalls als ein Hohlprofil ausgebildet ist, wobei weitere Rahmen- bzw. Verbindungsteile 26, 27 zur Verbindung mit kurzen Rahmenteilen 18, 19 vorgesehen sind. Das gebogene Rahmenteil 24 kann den Vorgaben entsprechende Krümmungsradien oder Kurvenformen aufweisen. Der Bausatz für den Zusammenbau des Formrahmens enthält zweckmäßig eine vorgegebene Anzahl unterschiedlich ausgebildeter gebogener Rahmenteile und ferner auch unterschiedlich lang ausgebildete kurze Rahmenteile.

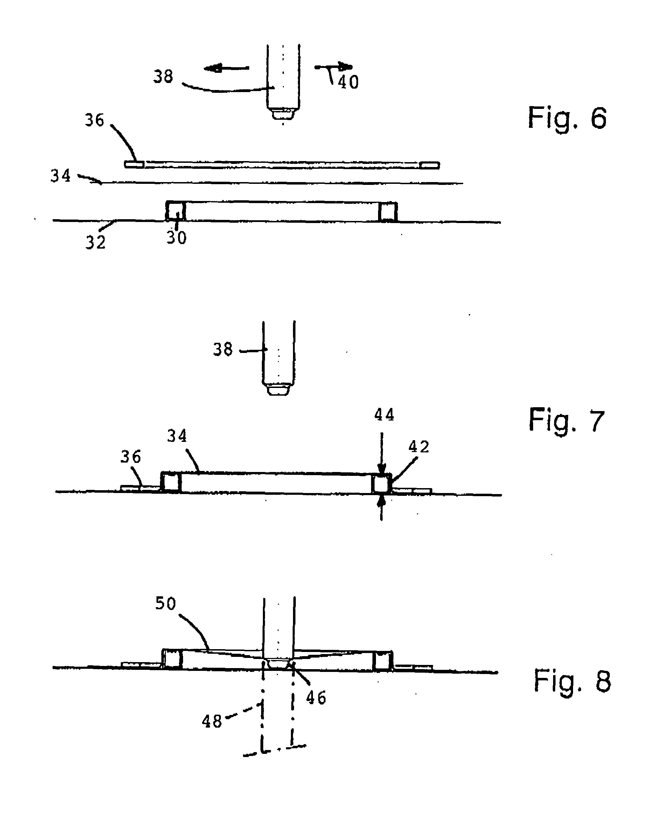

Figur 6 zeigt die erfindungsgemäße Vorrichtung mit dem gemäß obigen Ausführungen vormontierten Formrahmen 30, welcher auf einer Ziehplatte 32 angeordnet ist und auf dieser fixiert und/oder mit dieser fest verbunden ist. Der Formrahmen 30 und die Ziehplatte 32 bilden und/oder ersetzen die bisher übliche Tiefziehform. Über dem Formrahmen 30 und der Ziehplatte 32 befindet sich die auf das erforderliche Maß geschnittene Kunststoffplatte 34, welche insbesondere aus Sanitäracryl besteht. Des Weiteren ist ein Fensterrahmen 36 vorgesehen, mittels welchem die Kunststoffplatte 34 auf dem Formrahmen 30 und der Ziehplatte 32 festlegbar ist. Der Fensterrahmen 36 weist bezüglich der Außenkontur des Formrahmens 30 entsprechend vergrößerte Abmessungen derart auf, dass die Kunststoffplatte 34 über den Formrahmen 30 gezogen und auf der Ziehplatte 32 fixiert werden kann. Der Fensterrahmen 36 ist in zweckmäßiger Weise analog zum Formrahmen 30 mit variablen Maßen ausgebildet und insbesondere gleichfalls aus Rahmenteilen zusammengesetzt und/oder aufgebaut. Die Vorrichtung enthält weiterhin einen Oberstempel 38 zur Herstellung eines Auslaufs im schalenförmigen Element. Wie mit den Pfeilen 40 angedeutet, kann die Relativposition des Oberstempels zum Formrahmen 30, der Ziehplatte 32 sowie der Kunststoffplatte 34 definiert vorgegeben werden. Somit ist die Anordnung und/oder Positionierung und/oder die Ausbildung des Ablaufs des aus der Kunststoffplatte erfindungsgemäß hergestellten schalenförmigen Elements beliebig vorgebbar.

Anhand der Figuren 7 bis 11 wird nachfolgend das vorgeschlagene Herstellverfahren näher erläutert. Nach der Erwärmung der Kunststoffplatte 34 über den Formrahmen 30, wobei die Kunststoffplatte 34 in geeigneter Weise in der Vorrichtung gehalten wird, wird gemäß Figur 7 die Kunststoffplatte 34 mittels des Fensterrahmens 36 auf der Ziehplatte 32 fixiert. Hierbei erfolgt eine Entlüftung im Außenbereich, insbesondere durch die vorstehend erwähnten Entlüftungslöcher, wobei der äußere Rand 42 geformt wird. Es sei an dieser Stelle ausdrücklich darauf hingewiesen, dass der Formrahmen 30 in bevorzugter Weise eine zumindest im Wesentlichen gleichbleibende Höhe 44 aufweist zur Ausbildung des äußeren Randes 42.

Figur 8 zeigt die Herstellung des Ablaufs bzw. Ablaufkegels 46. Wie ersichtlich, wurde hierzu der Oberstempel 38 in Richtung auf die Kunststoffplatte 34 nach unten in die Kunststoffplatte 34 bewegt und/oder gefahren. Wie mit strichpunktierten Linien 48 angedeutet, kann im Rahmen der Erfindung ferner ein Gegenstempel zur Unterstützung und/oder korrekten Ausformung des Ablaufkegels vorgegeben sein.

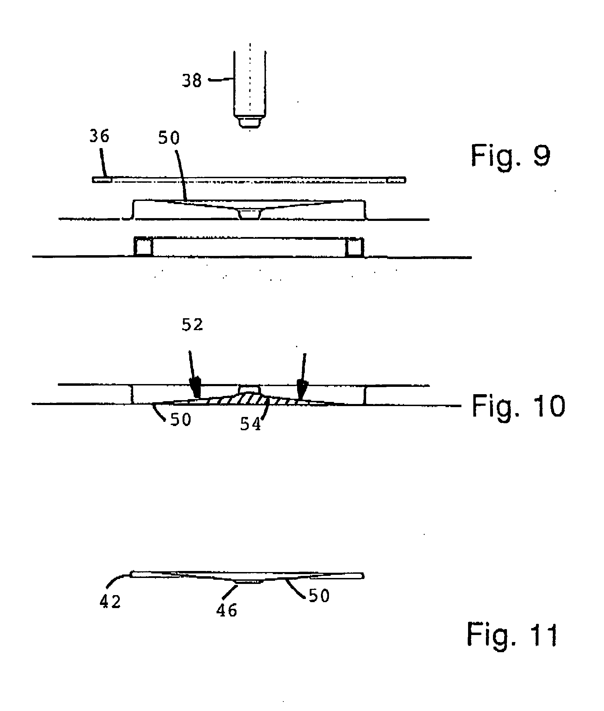

Figur 9 zeigte den Verfahrensschritt der Entformung, wobei der Oberstempel 38 nach oben zurück gefahren worden ist und auch der Fensterrahmen 36 die Ausgangsposition einnimmt. Das aus der Kunststoffplatte 34 erfindungsgemäß hergestellte schalenförmige Element oder Formteil 50 kann nunmehr aus der Vorrichtung zur weiteren Bearbeitung entnommen werden.

Figur 10 zeigt einen weiteren Schritt des erfindungsgemäß vorgeschlagenen Herstellverfahrens, wobei das schalenförmige Element 50 im Vergleich mit Figur 9 in einer um 180° gedrehten Position dargestellt ist. Wie mit den Pfeilen 52 angedeutet, wird das schalenförmige Element 50 mit einer Beschichtung versehen, um insbesondere eine Aussteifung und/oder vorteilhafte und/oder optimierte Vorgabe der Stabilität des Elements 50 zu erhalten.

Um beim Beschichten eine Verformung des schalenförmigen Elements 50 zu vermeiden, ist in vorteilhafter Weise ein Unterstützungselement 54, insbesondere ein flexibler Sand-Formsack vorgesehen, und zwar gemäß Zeichnung unter der Innenseite des schalenförmigen Elements. Schließlich zeigt Figur 11 das schalenförmige Element, und zwar gegenüber Figur 10 um 180° gedreht, in der Gebrauchsstellung, wobei der äußere Rand 42 und ferner auch der Ablauf 46 auf die erforderliche Form und/oder Größe zugeschnitten sind.

### Bezugszeichen

- 1 - 4: Rahmenteil / Profilteil
- 6 - 9: Rahmenteil / Eckverbinder
- 10, 11: Verbindungselement / Verbindungszapfen von 6-9
- 12: Länge von 1, 3
- 14: Länge von 2, 4
- 16: Entlüftungsloch / gestrichelte Linie
- 18, 19: kurzes Rahmenteil
- 20: Rahmenteil / Formstück
- 22, 23: Verbindungselement / Verbindungszapfen
- 24: gebogenes Rahmenteil
- 26, 27: Rahmenteil / Verbindungsstück
- 30: Formrahmen
- 32: Ziehplatte
- 34: Kunststoffplatte
- 36: Fensterrahmen
- 38: Oberstempel
- 40: Pfeil
- 42: äußerer Rand
- 44: Höhe von 30
- 46: Ablauf
- 48: Gegenstempel
- 50: schalenförmiges Element
- 52: Pfeil / Beschichtung
- 54: **Unterstützungselement**

## Patentansprüche

1. Vorrichtung zur Herstellung eines schalenförmigen Elements, insbesondere Duschwanne oder Duschboden, aus einer Kunststoffplatte, welche bevorzugt aus Sanitäracryl besteht,
**dadurch gekennzeichnet, dass** ein variabel vormontierbarer Formrahmen vorgesehen ist, welcher aus verschiedenen und/oder aufeinander abgestimmten Rahmenteilen (1-4), (6-9) aufgebaut ist.

2. Vorrichtung nach Anspruch 1, **dadurch gekennzeichnet, dass** die Rahmenteile (1-4), (6-9) mittels Verbindungselementen (10, 11, 22, 23) fest miteinander verbunden sind und/oder dass die Rahmenteile als Hohlprofile ausgebildet sind oder an den Enden einen Hohlraum aufweisen, in welche das jeweilige Verbindungselement mit einem Zapfen (10, 11, 22, 23) eingreift, oder umgekehrt.

3. Vorrichtung nach Anspruch 1 oder 2, **dadurch gekennzeichnet, dass** die Rahmenteile (1- 4) als Profilteile ausgebildet sind und/oder dass die Rahmenteile (6-9) als Eckverbinder ausgebildet sind, wobei die Profilteile (1-4) und/oder die Eckverbinder die bevorzugt als Zapfen ausgebildeten Verbindungselemente (10, 11, 22, 23) aufweisen.

4. Vorrichtung nach einem der Ansprüche 1 bis 3, **dadurch gekennzeichnet, dass** die Rahmenteile (1-4), (6-9) variable und/oder vorgegebene unterschiedliche Längen (12, 14) aufweisen und/oder dass die Rahmenteile oder Verbindungselemente als Teleskop-profile ausgebildet sind oder solche enthalten.

5. Vorrichtung nach einem der Ansprüche 1 bis 4, **dadurch gekennzeichnet, dass** wenigstens ein Rahmenteil (24) gebogen ausgebildet ist und/oder dass wenigstens zwei gebogene Rahmenteile (24) vorgesehen sind und/oder dass die Rahmenteile (24) unterschiedliche Krümmungsradien aufweisen und/oder unterschiedlich gebogen ausgebildet sind und/oder unterschiedliche Größen und/oder unterschiedliche Längen aufweisen, und/oder dass wenigstens ein Rahmenteil (20) als ein Formstück ausgebildet ist.

6. Vorrichtung nach einem der Ansprüche 1 bis 5, **dadurch gekennzeichnet, dass** eine Ziehplatte (32) vorgesehen ist, auf welcher der aus den Rahmenteilen aufgebaute Formrahmen (30) positioniert und/oder fixiert angeordnet ist, und/oder dass die Rahmenteile (1-4, 6-9) im Wesentlichen eine gleiche vorgegebene Höhe (44) aufweisen.

7. Vorrichtung nach einem der Ansprüche 1 bis 6, **dadurch gekennzeichnet, dass** zur Herstellung des schalenförmigen Elements ein Oberstempel (38) vorgesehen ist, mittels welchem insbesondere ein Ablauf (46) in die Kunststoffplatte (34) und/oder das schalenförmige Element (50) einbringbar ist, wobei der Oberstempel (38) bezüglich der Kunststoffplatte (34) und/oder des schalenförmigen Elements (50) und/oder des Formrahmens (30) in vorgegebener Weise ausrichtbar ist.

8. Bausatz für einen Formrahmen (30), enthaltend eine vorgegebene Anzahl der Rahmenteile nach einem der Ansprüche 1 bis 7.

9. Verfahren zur Herstellung eines schalenförmigen Elements, insbesondere Duschwanne oder Duschboden, aus einer Kunststoffplatte, welche bevorzugt aus Sanitäracryl besteht, **dadurch gekennzeichnet, dass** eine Vorrichtung nach den Ansprüchen 1 bis 7, oder ein gemäß dem Anspruch 8 ausgebildeter Bausatz verwendet wird.

10. Schalenförmiges Element, **gekennzeichnet durch** die Herstellung mit der Vorrichtung nach einem der Ansprüche 1 bis 7 oder dem Bausatz nach Anspruch 8.
